# EUROPÄISCHE PATENTSCHRIFT

(11) **EP 3 378 595 B1**
(45) Veröffentlichungstag und Bekanntmachung des Hinweises auf die Patenterteilung: **22.05.2019**
(21) Anmeldenummer: 17162750.8
(22) Anmeldetag: 24.03.2017
(51) Int. Cl.: B24B 39/00, B24B 39/04

(54) **KÄFIGANORDNUNG FÜR FESTWALZROLLEN**
CAGE ASSEMBLY FOR FIXED SHAFT ROLLER
SYSTÈME DE CAGE POUR ROULEAU DE LAMINOIR FIXE

(43) Veröffentlichungstag der Anmeldung: 26.09.2018
(73) Patentinhaber: HEGENSCHEIDT-MFD GmbH, 41812 Erkelenz (DE)
(72) Erfinder: STEFFENS, Toni, 41812 Erkelenz (DE); ZIMMERMANN, Johannes, 52538 Selfkant (DE); KISSER, Werner, 41812 Erkelenz (DE)
(74) Vertreter: Rausch Wanischeck-Bergmann Brinkmann

(56) Entgegenhaltungen:
- EP-A1- 1 318 889
- EP-A1- 1 468 783
- JP-B2- 4 586 651

## Beschreibung

Die vorliegende Erfindung betrifft eine Käfiganordnung für Festwalzrollen. Es handelt sich dabei um im Wesentlichen scheibenförmige Walzrollen, welche in einem an einem Gehäuse angeordneten Rollenkäfig geführt und durch ein im Wesentlichen streifenförmiges und in einer vom Walzrollenbereich entfernten Position am Gehäuse befestigten Käfigblech in Position gehalten sind.

Derartige Käfiganordnungen sind aus dem Stand der Technik bekannt.

Eine gattungsgemäße Vorrichtung ist beispielsweise in der EP 0 839 607 beschrieben. Eine Festwalzrolle stützt sich bei dieser Vorrichtung gegen ein Rollenpaar ab und ist durch ein Kulissenblech gehalten.

In der WO 02/22284 A1 ist ein Rollenkäfig der gattungsgemäßen Art beschrieben, bei welchem Schmiermittel speichernde und abgebende Materialien verwendet werden, um bei Bedarf der Festwalzrolle Schmiermittel zuzuführen.

Aus der EP 1468783 A1 ist eine Käfiganordnung bekannt, die im Wesentlichen scheibenförmige Walzrollen umfasst, welche in einem an einem Gehäuse angeordneten Rollenkäfig geführt sind.

Inzwischen sind die Walzvorgänge insbesondere durch bessere Messmethoden und Steuerungsmethoden komplexer. Festwalzrollen sind nicht mehr zwingend mittelebenensymetrisch, sondern haben Konturen, die ein optimales Abstützen und Ableiten von Kräften ermöglichen, um so in optimaler Weise die gewünschten Konturen zu erzeugen und zugleich die Standzeit der Rollen zu verbessern. Darüber hinaus ist es wünschenswert, die Gehäuse in unterschiedlichen Ausführungsformen flexibler gestalten zu können. Somit ist es wichtig, dass die Festwalzrollen richtig montiert werden. Ansonsten können weder die gewünschten Positionen gewalzt werden noch sind die Walzrollen ausreichend abgestützt.

Ausgehend vom vorbeschriebenen Stand der Technik liegt der vorliegenden Erfindung die **Aufgabe** zugrunde, eine Käfiganordnung der gattungsgemäßen Art dahingehend weiterzubilden, dass weitgehend ausgeschlossen ist, dass Festwalzrollen falsch montiert werden und darüber hinaus eine optimale Führung und Abstützung der Rollen erfolgt.

Zur technischen **Lösung** dieser Aufgabe wird eine Käfiganordnung mit den Merkmalen des Patentanspruches 1 vorgeschlagen. Weitere Vorteile und Merkmale ergeben sich aus den Unteransprüchen.

Gemäß der Erfindung weist das Käfigblech einen Haltesteg auf. Dieser steht in bestimmungsgemäßer Einbauposition in Richtung einer Walzrolle vor und ist im Stirnflächenbereich so ausgearbeitet, dass er dort der Form der dem Steg bestimmungsgemäß zugewandten Walzrollenoberfläche entspricht. Auf diese Weise wird die Walzrolle optimal in Position gehalten und gestützt. Darüber hinaus ist es nicht möglich, die Walzrolle falsch herum einzubauen, da dann die Formenübereindeckung nicht mehr gegeben ist.

In vorteilhafter Weise kann das Käfigblech zwei entsprechende Haltestege aufweisen, die beide im Stirnflächenbereich entsprechend der Walzrollenformen ausgearbeitet bzw. ausgeformt sind. Somit kann an dem Gehäuse mit einem Käfigblech ein Rollenpaar angeordnet und gehalten werden. Selbstverständlich können auch mehrere entsprechende Ausbildungen vorhanden sein, wenn das Werkzeug entsprechend gesteuert wird.

In vorteilhafter Weise ist der Haltesteg endseitig am Käfigblech ausgebildet. Dies ist in der Regel für einseitig befestigte Käfigbleche umgesetzt. Ansonsten kann das Käfigblech Haltestege im mittleren Bereich aufweisen.

In vorteilhafter Weise ist das Käfigblech einstückig ausgebildet, d.h., die Haltestege sind einteilig mit dem Käfigblech gebildet. Selbstverständlich sind auch montierte und sogar wechselbare Lösungen im Rahmen der Erfindung.

Das Käfigblech ist gemäß einem vorteilhaften Vorschlag aus Metall, es kann aber auch aus sämtlichen sonstigen Materialien gefertigt sein, wie dies im Stand der Technik geläufig ist. Darunter gehören auch beispielsweise die Verwendung von zur Aufnahme und Abgabe von Schmierstoffen geeignete Werkstoffe, die zumindest im Bereich der Haltestege verwendet werden können. Auch ist eine modulare Fertigung aus unterschiedlichen Werkstoffen möglich.

In vorteilhafter Weise weist das Käfigblech eine Einstellkulisse auf, um es relativ zu den zu haltenden Walzrollen optimal zu positionieren und einzustellen. Eine Einstellkulisse kann gemäß einem vorteilhaften Vorschlag der Erfindung durch eine endseitige Abwinklung des Käfigbleches gebildet sein, so dass mittels einer Spannschraube beispielsweise eine Justierung möglich ist.

In vorteilhafter Weise weist das Käfigblech an beiden Endbereichen eine Einstellkulisse auf, um dieses einzustellen und zu fixieren.

Mit der Erfindung wird eine mit geringem wirtschaftlichem Aufwand herstellbare Lösung bereitgestellt, die die Montage und den Einsatz von Festwalzrollen optimiert. Weitere Vorteile und Merkmale der Erfindung ergeben sich aus der Beschreibung anhand der Figuren. Dabei zeigen:
- Fig. 1: eine schematische perspektivische Darstellung eines Ausführungsbeispiels für eine Käfiganordnung,
- Fig. 2: eine Draufsicht auf eine Ausführungsform eines Käfigbleches;
- Fig. 3: eine Seitenansicht des Käfigbleches gemäß Fig. 2;
- Fig. 4: eine Stirnansicht des Käfigbleches;
- Fig. 5: eine Draufsicht auf eine weitere Ausführungsform eines Käfigbleches gemäß der Erfindung.

In den Figuren sind gleiche Elemente mit gleichen Bezugszeichen versehen.

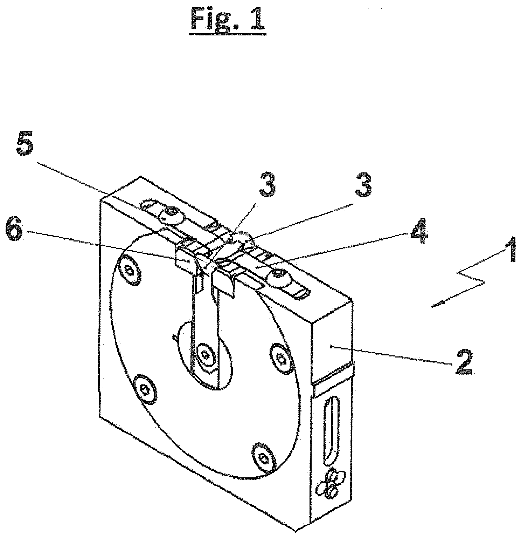

Fig. 1 zeigt eine perspektivische Darstellung einer Käfiganordnung 1 mit einem Gehäuse 2 in welchem im gezeigten Ausführungsbeispiel zwei Festwalzrollen 3 eingesetzt sind. Diese sitzen in Käfigen 6 und werden mittels eines Käfigblechs 4 gehalten, welches im gezeigten Ausführungsbeispiel mittels Schrauben 5 am Gehäuse 2 befestigt sind.

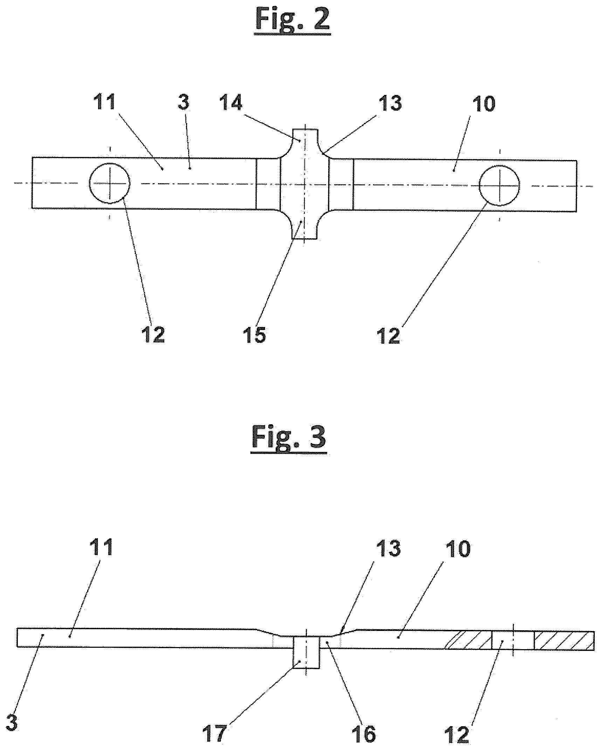

Das Käfigblech 3 gemäß der Erfindung ist detailliert in den Figuren 2, 3 und 4 in einer Ausführungsform gezeigt. Das Käfigblech 3 hat im gezeigten Ausführungsbeispiel zwei Seitenbereiche 10 und 11, welche Löcher 12 für die Befestigung aufweisen. Im Mittelbereich 13, der im gezeigten Ausführungsbeispiel eine Senke 16 aufweist, sind zwei Haltestege 14 und 15 ausgebildet. Diese sind Bestandteil eines Materialblocks 17, dessen Stirnflächen 18 in gezeigter Weise ausgebildet sind. Damit ist dieses Käfigblech 8 geeignet, Walzrollen zu fixieren, die eine wie im gezeigten Ausführungsbeispiel etwa 70°-Neigung an der dem Käfigblech zugewandten Oberfläche aufweisen.

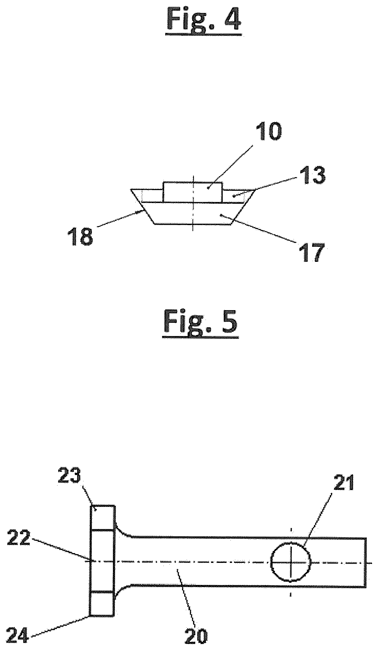

Fig. 5 zeigt eine Abwandlung eines Käfigbleches 20, bei welchem Haltestege 23, 24 am Endbereich 22 ausgebildet sind. Zur Befestigung hat das Käfigblech 20 eine Bohrung 21.

### Bezugszeichen

- 1: Käfiganordnung
- 2: Gehäuse
- 3: Walzrollen
- 4: Käfigblech
- 5: Schraube
- 6: Rollenkäfig

- 10: Seitenbereich
- 11: Seitenbereich
- 12: Bohrung
- 13: Mittelbereich
- 14: Haltesteg
- 15: Haftesteg
- 16: Senke
- 17: Materialblock
- 18: Stirnfläche

- 20: Käfigblech
- 21: Bohrung
- 22: Endbereich
- 23: Haltesteg
- 24: Haltesteg

## Patentansprüche

1. Käfiganordnung (1), welche im wesentlichen scheibenförmige Walzrollen (3) umfasst, welche in einem an einem Gehäuse (2) angeordneten Rollenkäfig (6) geführt und durch ein im wesentlichen streifenförmiges und in einer vom Walzrollenbereich entfernten Position am Gehäuse (2) befestigten Käfigblech (4) in Position gehalten sind, **dadurch gekennzeichnet, dass** das Käfigblech (4) einen Haltesteg (14) aufweist, welcher in bestimmungsgemäßer Einbauposition in Richtung einer Walzrolle (3) vorsteht und einen Stirnflächenbereich (18) aufweist, der hinsichtlich des Formverlaufes einer dem Steg (14) zugewandten Walzrollenoberfläche entspricht.

2. Käfiganordnung nach Anspruch 1, **dadurch gekennzeichnet, dass** das Käfigblech zwei Haltestege (14, 15) aufweist, die beide im Stirnflächenbereich (18) entsprechend ausgeformt sind.

3. Käfiganordnung nach einem der vorhergehenden Ansprüche, **dadurch gekennzeichnet, dass** der Haltesteg (14) mittig am Käfigblech (4) ausgebildet ist.

4. Käfiganordnung nach einem der vorhergehenden Ansprüche 1 oder 2, **dadurch gekennzeichnet, dass** der Haltesteg (14) endseitig am Käfigblech (4) ausgebildet ist.

5. Käfiganordnung nach einem der vorhergehenden Ansprüche, **dadurch gekennzeichnet, dass** das Käfigblech (4) einstückig ausgebildet ist.

6. Käfiganordnung nach einem der vorhergehenden Ansprüche, **dadurch gekennzeichnet, dass** das Käfigblech (4) aus Metall gebildet ist.

7. Käfiganordnung nach einem der vorhergehenden Ansprüche, **dadurch gekennzeichnet, dass** der Haltesteg (14) aus einem zur Aufnahme und Abgabe von Schmierstoff geeigneten Werkstoff gebildet ist.

8. Käfiganordnung nach einem der vorhergehenden Ansprüche, **dadurch gekennzeichnet, dass** das Käfigblech (4) eine Einstellkulisse aufweist.

9. Käfiganordnung nach einem der vorhergehenden Ansprüche, **dadurch gekennzeichnet, dass** die Einstellkulisse durch eine endseitige Abwinklung des Käfigbleches (4) gebildet ist.

10. Käfiganordnung nach einem der vorhergehenden Ansprüche, **dadurch gekennzeichnet, dass** das Käfigblech an beiden Enden eine Einstellkulisse aufweist.

## Claims

1. Cage arrangement (1) which essentially comprises disc-shaped rollers (3) which are guided in a roller cage (6) arranged on a housing (2) and said rollers (3) are held in position by a cage plate (4) which is essentially strip-shaped and attached to the housing (2) in a position which is remote from the roller area, **characterised in that** the cage plate (4) has a retaining bar (14) which, in its intended installation position, is protruding in the direction of a roller (3) and has a front surface section (18) which corresponds concerning the shape to a roller surface facing the retaining bar (14).

2. Cage arrangement according to claim 1, **characterised in that** the cage plate has two retaining bars (14, 15) which are both accordingly shaped in the front surface section (18).

3. Cage arrangement according to one of the preceding claims, **characterised in that** the retaining bar (14) is provided centrally on the cage plate (4).

4. Cage arrangement according to one of the preceding claims 1 or 2, **characterised in that** the retaining bar (14) is provided on the end of the cage plate (4).

5. Cage arrangement according to one of the preceding claims, **characterised in that** the cage plate (4) is provided in one piece.

6. Cage arrangement according to one of the preceding claims, **characterised in that** the cage plate (4) is made from metal.

7. Cage arrangement according to one of the preceding claims, **characterised in that** the retaining bar (14) is formed from a material which is suitable for receiving and dispensing lubricant.

8. Cage arrangement according to one of the preceding claims, **characterised in that** the cage plate (4) includes an adjusting gate.

9. Cage arrangement according to one of the preceding claims, **characterised in that** the adjusting gate is formed by an end-side deflection of the cage plate (4).

10. Cage arrangement according to one of the preceding claims, **characterised in that** the cage plate includes an adjusting gate at both ends.

## Revendications

1. Disposition de cage (1) comprenant principalement des rouleaux de laminage (3) en forme de disques, passant dans un support à galet (6) disposé sur un boîtier (2) et de laminage (3) sont maintenus en position par une bride (4), principalement en forme de bande, et fixés sur le boîtier (2) dans une position éloignée de la zone des rouleaux de laminage, **caractérisée en ce que** la bride (4) comporte une patte de retenue (14) qui est en saillie dans une position de montage dépasse à la destination dans le sens d'un rouleau de laminage (3) et présente une partie frontale (18) dont la forme correspond à une surface de rouleau de laminage tournée vers l'âme (14).

2. Disposition de cage selon la revendication (1), **caractérisée en ce que** la bride comporte deux pattes de retenue (14, 15) toutes deux formées de manière correspondante dans la partie frontale (18).

3. Disposition de cage selon l'une des revendications précédentes, **caractérisée en ce que** la patte de retenue (14) est formée au milieu de la bride (4).

4. Disposition de cage selon l'une des revendications 1 ou 2 précédentes, **caractérisée en ce que** la patte de retenue (14) est formée à l'extrémité de la bride (4).

5. Disposition de cage selon l'une des revendications précédentes, **caractérisée en ce que** la bride (4) est formée en une seule pièce.

6. Disposition de cage selon l'une des revendications précédentes, **caractérisée en ce que** la bride (4) est formée en métal.

7. Disposition de cage selon l'une des revendications précédentes, **caractérisée en ce que** la patte de retenue (14) est formée dans un matériau approprié pour recevoir et dispenser du lubrifiant.

8. Disposition de cage selon l'une des revendications précédentes, **caractérisée en ce que** la bride (4) présente une coulisse de réglage.

9. Disposition de cage selon l'une des revendications précédentes, **caractérisée en ce que** la coulisse de réglage est formée par un coude unilatéral de la bride (4).

10. Disposition de cage selon l'une des revendications précédentes, **caractérisée en ce que** les deux extrémités de la bride présentent une coulisse de réglage.
